# EUROPEAN PATENT APPLICATION

(11) **EP 4 671 685 A1**
(43) Date of publication of application: **31.12.2025**
(21) Application number: 24185438.9
(22) Date of filing: 28.06.2024
(51) Int. Cl.: G01C 21/00

(54) **A METHOD OF UPDATING A MAP IN A VEHICLE**

(71) Applicant: Aptiv Technologies AG, 8200 Schaffhausen (CH)
(72) Inventor: HASECKE, Frederik, Solingen, Germany (CH); COLLING, Pascal, Wuppertal, Germany (CH)
(74) Representative: Lewis Silkin LLP

(57) **Abstract**

A method of using sensor inputs from a driver monitoring system (DMS) to update information on a map (M), comprises the steps of (i) acquiring sensor data from sensors in a vehicle or a fleet (F), at least including an internal sensor (10, 11, 12, 13) configured for monitoring a driver characteristic; and (ii) identifying an extraordinary event (e.g. sudden braking, rapid head movement or increased stress level) from the data along with a location (e.g. by GPS) of where the event occurred. A global map (M) can then be updated at a server (50) to show the location of the extraordinary event as an attention region; i.e. an area where heightened awareness may be needed by a driver or autonomous vehicle. In a particular form, the attention region is determined/dimensioned according to a gaze pattern of a driver when the extraordinary event took place.

## Description

### Field

The present disclosure relates to enhancing the features of a map, e.g. a high-definition (HD) map, utilising data derived from a driver monitoring system (DMS) and its associated sensor inputs/outputs.

### Background

A high-definition (HD) map is an accurate virtual map used primarily in the automotive field. Such maps may contain details not normally present on more basic driver assistance/route finding maps. In a particular example, data is captured from an array of vehicle-based sensors across a fleet. HD map providers may utilise special recording vehicles to collect sensor data for building the map, which includes also manual refinements.

HD maps are becoming increasingly crucial in Advanced Driver Assistance Systems (ADAS) and autonomous driving (AD) technologies. The improved detail in the map provides a comprehensive framework within which vehicles can navigate and drive, offering a reliable backup when live systems falter or are obstructed. HD maps can be configured to consist of extensive features, including road geometry, lane structures, points of interest (POIs) and lane markers, thereby enhancing the vehicle's interpretation of its surroundings. Particularly, HD maps play a vital role in ascending from Level 2 to Level 3 autonomous driving and are essential for Level 2+.

Known map creation systems/methods, such as outlined by our published patent application EP4230960A1, may leverage single and/or multimodal sensor arrays of LiDAR, radar, digital cameras, as well as machine learning (ML Perception) alongside GPS, to compile HD maps from multiple data input streams. The approach captures and aggregates data with regard to various entities like other vehicles, pedestrians, and cyclists, integrating vital metadata such as speed and proximity to the ego vehicle. The resulting map may assist in providing detailed paths for different traffic participants and essential meta information like trail speeds and density functions, providing a rich data layer for ADAS and AD functionalities.

Some maps for ADAS and AD systems are layered with a wide array of metadata that significantly enhances their utility and safety features. Beyond basic road geometry and traffic participant trails, these maps incorporate nuanced meta information critical for informed decision-making by autonomous systems. Some key types of metadata presently included in computer implemented maps are:
- GPS-Denied Areas: Zones where GPS signals are weak or non-existent, such as tunnels, dense urban canyons, or under heavy foliage. HD maps mark these areas to enable vehicles to rely on alternative navigation and positioning techniques, such as inertial navigation systems or landmark-based localization;
- Dynamic Conditions: Real-time or near-real-time data about traffic conditions, road works, and environmental factors like weather conditions, which can affect driving decisions and route planning;
- Road Attributes: Lane width, curvature, incline, surface type, and the presence of speed bumps or potholes. These details are crucial for precise manoeuvring and ride comfort;
- Traffic Signs and Signals: Exact locations and information about traffic signs, signals, and road markings, including temporary signs for construction or special events, which are essential for rule compliance and navigation;

- Points of Interest (POIs): Locations of crosswalks, roundabouts, stop lines, and other critical points, including infrastructure like gas stations, charging stations, and parking lots, are marked for enhanced navigation and convenience;
- Safety Zones: Areas with specific safety considerations, such as school zones and wildlife crossing areas are identified to prompt precautionary measures from the vehicle's driving system;
- Legal Restrictions: Information on jurisdiction-specific traffic laws, such as speed limits, right-of-way rules, and vehicle restrictions, ensuring compliance with local regulations;
- Behaviour Information: Based on tracked road users, the map can be enriched with behaviour data like average speed and its variance, traffic density, areas with lane changes and more.

Incorporating the above-identified types of metadata into HD maps provides a comprehensive data layer that significantly augments the situational awareness and decision-making capabilities of ADAS and autonomous driving systems, leading to safer and more efficient navigation.

Modern vehicles have additional monitoring capabilities, not related to map building. For example, since vehicle accidents often occur due to driver inattention or drowsiness, driver monitoring systems (DMS) are known to be integrated into mid and high-end vehicles, utilising in-vehicle cameras and other sensors configured to detect extraordinary states by monitoring driver behaviour. However, many DMS overlook the critical link between the driver's gaze and the external environment, posing challenges in complex driving scenarios.

Gaze estimation is a key DMS feature, using eye-tracking to determine the driver's focus, i.e. whether on the road or elsewhere, and providing feedback/alerts to correct inattention. Similarly, head pose estimation analyses the driver's head position to detect drowsiness, complementing gaze estimation for a more detailed picture of the driver's state so as to enable prompt interventions.

The integration of gaze and head pose estimation marks a significant step forward in road safety, offering detailed insights into driver behaviour for proactive accident prevention. The success of DMS hinges on seamless integration with vehicle safety features and driver responsiveness to system warnings.

By way of further background, in addition to monitoring gaze and head pose, advanced DMS are now using cameras (e.g. infrared and RGB) for vital signs detection, such as pulse and respiration rates. This innovative approach allows for non-intrusive monitoring of and insight into the driver's physiological state, providing a more comprehensive understanding of their alertness and well-being. It is known that, by analysing subtle changes in the IR imagery (e.g. slight variations in facial skin intensity associated with blood flow) these systems can detect early signs of stress, fatigue, or medical distress. Indeed, infrared cameras are used in many DMS activities, since they are active illuminating sensors that enable eye gaze tracking independent of the environment light condition.

### Summary

The present disclosure seeks to outline a system for building or improving a map for use in a vehicle. At the least, the disclosure seeks to provide an alternative to developers of mapping solutions for driver assistance and autonomous driving, e.g. in the automotive field.

According to a first aspect, a method (e.g. a computer-implemented method) of generating a map is described in claim 1. For example, a method of generating a map may comprise the steps of: acquiring sensor-based data of at least one sensor of at least one vehicle and location data related to a location unit of the at least one vehicle; wherein the at least one sensor includes an internal sensor configured for detecting extraordinary states by monitoring driver behaviour (e.g. as used with a driver monitoring system). The data is processed to identify an attention region/anomaly event and update the map with a location of the region/event. In this way, the map may either display and/or audibly warn of the approach an anomaly event or be used to plot a route that avoids the anomaly event. For the avoidance of doubt, the present disclosure often refers to a so-called "HD" map; however the invention may be compatible with all computer implemented mapping solutions, e.g. an ADAS map.

It will be apparent that the invention is concerned with utilising available DMS sensors in a vehicle or a fleet of vehicles, thereby equipping same to augment a mapping solution. In this way, map accuracy and functionality can be improved, increasing safety over the fleet; i.e. improving insights in the form of map updates for the benefit of other road users. The system may also leverage exterior sensing devices by detecting other road users in the environment and optionally by segmenting the environment itself.

As is known, DMS data is used to gauge a driver's general attention level, e.g. whether they are focused on the road ahead or perhaps distracted by a passenger. However, by further interpretation/processing, it is possible to identify "attention regions," i.e. external features to the vehicle, that attract frequent glances from drivers across a fleet. This may be achieved by considering the vehicle's position, the driver's location within the vehicle, and the direction of the driver's head or gaze. It is therefore possible to pinpoint the exact focus of the driver's gaze in real-time.

By incorporating essential exterior and host vehicle data, the present system can be configured to record instances of abrupt braking or other notable anomalies, such as frenzied head turns (e.g. due to confusion), abrupt changes in vital signs. Especially in combinatory cases, where multiple anomalies occur, these are markers of situations that require raised attention.

The detection of anomaly markers may trigger an added process for deriving the gaze target region of the driver and to store it together with the other collected information. A gaze target classification may be determined by repeated anomalies, e.g. always detecting a car/pedestrian/truck in a certain position that matches with a gaze vector. This would result in enriched anomaly definition if it were always matched to the same instance. In a further embodiment, day/night/sunrise/sundown environments can be taken into account, e.g. during certain seasons, where regions have a sudden opening of the sun directly into the eyes of the driver, which may cause temporarily blindness. Such derived information, that anomalies may only happen at specific times of day, could improve utility of the invention.

Each anomalous/extraordinary recorded event can include comprehensive details such as the GPS location at the time of the incident, vehicle orientation, external detections, the driver's head pose and gaze direction. This wealth of data pinpoints exactly where and what the driver was looking at during these critical moments, and what was present in the surrounding environment. A map/platform, accessible by all vehicles in the fleet, can be updated with this information for the benefit of all users. Particularly, the map can be marked with an area requiring raised attention or a route may be adjusted to avoid this area entirely. The map may prime/prewarn a driver to be aware of an upcoming event in the field of view so as not to be taken by surprise; or in some forms, plot a route which avoids the event entirely.

### Brief Description of Drawings

Illustrative embodiments will now be described with reference to the accompanying drawings in which:
Figure 1 illustrates a schematic flow chart for recording information in anomalous driving situations; and
Figure 2 illustrates a schematic flow chart for implementation of the system, i.e. where individual anomaly situations are summarised to scenarios that influence map markings; and
Figure 3 illustrates a simplified explanation of method steps.

### Detailed Description

The following description presents exemplary embodiments and, together with the drawings, serves to explain principles of the invention. However, the scope of the invention is not intended to be limited to the precise details of the embodiments or exact adherence with all features and/or method steps, since variations will be apparent to a skilled person and are deemed also to be covered by the description. Terms for components used herein should be given a broad interpretation that also encompasses equivalent functions and features. In some cases, several alternative terms (synonyms) for functional features have been provided, such as by use of "/" symbol to suggest interchangeability, but such terms are not intended to be exhaustive. Descriptive terms should also be given the broadest possible interpretation; e.g. the term "comprising" as used in this specification means "consisting at least in part of" such that interpreting each statement in this specification that includes the term "comprising", features other than that or those prefaced by the term may also be present. Related terms such as "comprise" and "comprises" are to be interpreted in the same manner.

The description herein refers to embodiments with particular combinations of steps or features, however, it is envisaged that further combinations and cross-combinations of compatible steps or features between embodiments will be possible. Indeed, isolated features may function independently as an invention from other features and not necessarily require implementation as a complete combination.

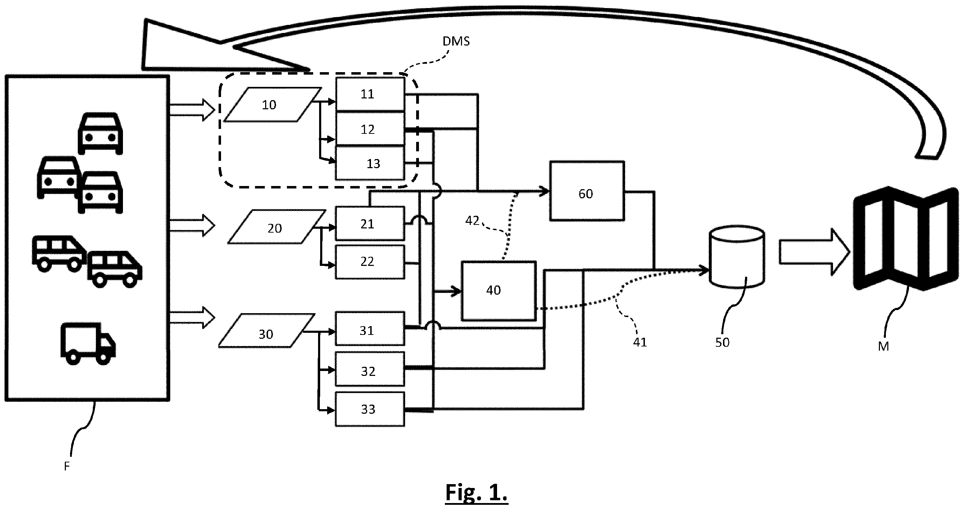

Figure 1 shows a system data flow for creating and storing anomaly moments with their position, velocity and surrounding objects in the environment, as well as the gaze target of the driver. All datapoints are recorded, abstracted and stored.

The system generally collects information from at least one vehicle, preferably a vehicle fleet F, by the use of multiple available sensors that are already in use for various vehicle operating/safety functions. The sensors may be categorized into at least three types, namely interior perception 10, exterior perception 20 and host vehicle operating information 30.

Interior perception 10 sensors may include one or more in-vehicle cameras, Lidar/radar etc; utilised for determining one or more of gaze estimation 11, head pose estimation 12, vital signs 13 as part of a driver monitoring system (DMS), generally denoted "DMS" as encircled by the dashed box in Figure 1. It will be appreciated that existing sensors of the DMS can be leveraged, without needing dedicated devices to collect data for the map system described herein. Sensors (both internal and external to the vehicle) may have dual functions and use for multiple purposes.

Exterior perception 20 sensors may include one or more cameras, Lidar/radar, ultrasonic sensors etc; utilised for determining one or more of object detection 21 and environment segmentation 22 as part of ADAS/AD functions required for monitoring conditions outside the vehicle/collision avoidance and the like.

Host vehicle operating information 30 includes collection of data, e.g. relating to GPS position 31, velocity 32 and steering 33.

In one exemplary form according to Figure 1, data collected across the input types, such as head pose estimation, vitals signs, object detection, velocity and steering may be evaluated for the purposes of anomaly or extraordinary event detection at block 40. In other words, a sudden decrease in velocity associated with braking may be combined with object detection and a spike in heart rate to determine an anomaly event which can be sent, via communication line 41, to a global scenario storage 50, for subsequently marking a region/location for raised attention on a map M that is, in turn, updated to the fleet F; as indicated by the directional arrow between map M and fleet F. An assessment of head movement and/or stress indicators (via biometric sensors) may give a measure of the seriousness of the event, which could be colour-coded on the map update. A weighting/rating may be allocated according to seriousness. Other examples of detectable event include: sudden steering movements, honking, eyes opening wide, sudden coarse language (detected via a cabin microphone), sudden acceleration (e.g it is common to flee when an anomaly occurs: fight/flight), prolonged fixed gaze outside of the normal view region (e.g., an intersection).

In addition to anomaly event detection at block 40, a gaze target region may also be monitored at block 60, e.g. based on input from sensors relating to gaze estimation 11, head pose estimation 12, object detection 21, environmental segmentation 22 and GPS position 31. According to Figure 1, a gaze target region 60 is triggered by a signal 42 generated by the detected anomaly event at black 40. The gaze information is stored together with the other collected information.

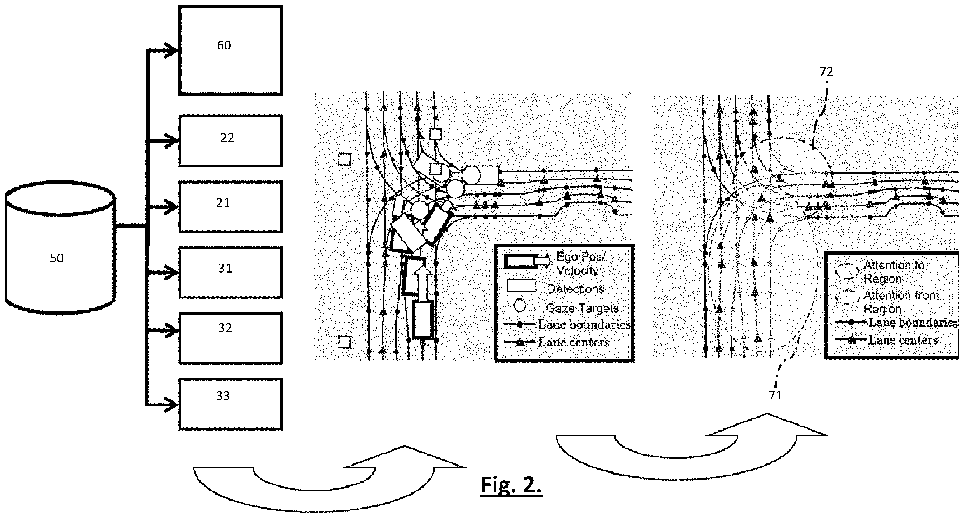

Through regular Over-The-Air (OTA) updates, anonymized data packets may be aggregated in the global centralized or cloud-based system 50. This system merges anomaly data with individual positions of vehicles in the fleet F and gaze focus points (60), identifying locations prone to frequent incidents. Such areas can then be integrated into the global map, highlighting same as zones requiring heightened driver or autonomous vehicle system vigilance. Such measures may include recommending, e.g. via visual, audible or tactile prompt, that drivers exercise extra caution or even automatically decelerate vehicles in these identified zones to enhance safety for all road users and passengers. In some forms, a route may be updated (automatically or after prompt) which has been adapted for the wellness of a driver, such as to avoid a stressful situation. A combination of features and a zone creation process is shown in Figure 2.

For example, the left side of Figure 2 represents where information is aggregated at the global storage 50 based on the gaze target region 60 with one or more of environment segmentation 22, object detection 21, GPS position 31, velocity 32 and/or steering. The aggregated information is combined and superimposed on a road map and, consequently, at the right side of Figure 2, resulting regions of prioritised attention *from* a first region 71 to a second region 72 is annotated to a map and then updated to the fleet. According to this example, the second region of attention 72 is approximately correspondent to the gaze targets represented by the plain circles in the centre roadmap of Figure 2.

In the approach to such areas (e.g. preferably before reaching first region 71), drivers can be pre-emptively warned to be vigilant and pay special attention at these critical points/regions (72), enhancing overall road safety.

Examples of situations that may be identified and designated for prioritized attention include, but are not limited to:
- Pedestrian-Prone Zones: Areas with high pedestrian activity, like school zones, parks, and busy urban streets, may be highlighted, e.g. to supplement already available map data relating to such areas and identify new areas. This information helps in adjusting vehicle speed and behaviour to enhance safety in such environments;
- Wildlife Crossing Areas: Similar to pedestrian detection, i.e. areas where drivers frequently focus their gaze off-road, coupled with sensor detections of animals, can help identify wildlife crossing hotspots;

- High-Accident Intersections: By analyzing locations where drivers exhibit sudden braking, sharp turns, or rapid head movement, coupled with sensor detections of close proximity to other vehicles, these intersections can be flagged as "high risk";
- Poorly Visible Driveways and Intersections: In regions with older infrastructure, obscured driveways or intersections can pose significant hazards. By identifying patterns where specific locations consistently trigger driver braking and attention, these can be marked on maps as high-risk areas;
- Blind Curves and Corners: Areas where drivers' gaze patterns show searching behaviour or rapid head movements, indicating limited visibility, can be identified as blind curves or corners needing caution;
- Construction Zones: Frequent changes in driver gaze direction, combined with sensor data indicating obstacles, lane closures, or workers near the roadway, can help pinpoint active construction zones;
- School Bus Routes and Stops: Frequent detection of school buses stopping, combined with drivers' gaze towards the buses or the sides of the road, can help map out school bus routes and stops;
- Other Non-Specified Zones: Some regions may prompt a raised attention level, without being clearly classifiable as one of the previously mentioned regions. These require the attention of the driver or autonomous vehicle to specific areas without an explicit knowledge as to why this region is important.

Anomalous regions, corresponding to the above examples, can be added to a global map, thereby allowing future users of the platform to benefit from the information and act according to the recommendations.

Identification of anomaly events and their associated locations may also be applicable for selecting a route to avoid such locations.

A DMS goes beyond mere head pose and eye gaze tracking, offering an array of insights centered on the driver. By evaluating body posture and vital signs, the system herein envisages providing a nuanced snapshot of the driver's current health status and stress levels, thereby providing a view of overall well-being.

Collection of data indicating conditions of wellness such as elevated blood pressure, increased heart rate, and heightened stress levels can guide recommendations for less taxing routes, especially in high-traffic scenarios. Coupled with real-time updates to a map - which monitors traffic flow and road conditions - the present disclosure introduces a novel layer of metadata, that is: driver-centric wellness navigation paths. This layer is informed by the collected vital sign data from a Mapping fleet.

The process described herein not only reflects immediate traffic conditions but also captures the impact of these conditions on the drivers' physical and mental states. Datapoints are gathered in anonymized form and refreshed continuously to identify patterns linking past driver well-being in specific locations with present traffic and health metrics.

Upon selecting a destination, the present solution may provide various route options for selection, considering the potential effects on the well-being of the driver and passengers. If a typically optimal route is frequently associated with high-stress levels, and a less direct alternative promises a more positive impact on occupant health, this alternative may be either suggested or discreetly chosen, potentially without the driver's explicit awareness.

Potentially, while a consideration for data privacy is recognised, the system may be configured to plot routes that avoid another road user that is acting erratically or, conversely, optionally direct a road user to the aid of another road user in the fleet that is experiencing an "extraordinary event" such as an accident or health emergency.

The present system also envisaged updates to remove or downgrade an "attention to" region if an event was temporary or there is a reduced severity of warning needed, e.g. where a road obstruction has been removed. Such observations may be determined if a current driver (or sample of drivers) does not get distracted at a marked area. Therefore, as the present system is configured to identify and show regions of raised attention, so to is it configured to reclassify or remove same.

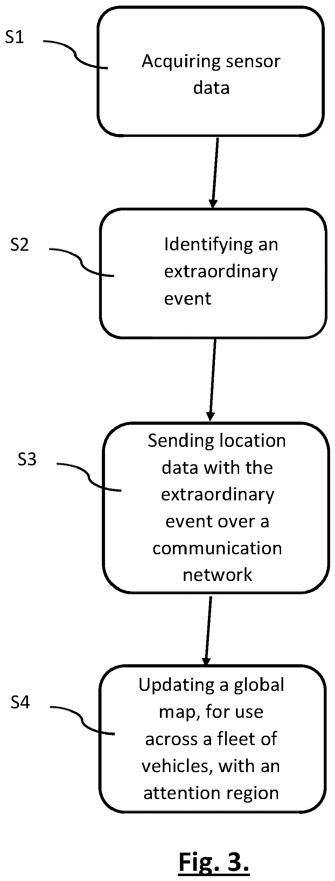

A simplified process is shown by Figure 3, namely a first step S1 where data is acquired from sensors in or about a vehicle. In accordance with the disclosure, the suite of sensors must at least include one internal sensor associated with a DMS, because this is used as an option for providing an improved layer of information in the updated map.

Step S2 represents identifying an extraordinary event/anomaly etc, such as indicated by a driver reaction of some kind. At step S3 information is sent over a network for further use, combined with location information which may identify an attention region.

At step S4 a global digital map is updated with the attention region and rolled out to the vehicle fleet so that users can benefit from this information.

In summary, a method of using sensor inputs from a driver monitoring system (DMS) is disclosed herein, in order to update information on a map. The method/system comprises the steps of acquiring sensor data from sensors in a vehicle or a fleet of vehicles, at least including an internal sensor configured for monitoring a driver characteristic; and identifying an extraordinary event (e.g. sudden braking, rapid head movement or increased stress level) from the data along with a location (e.g. by GPS) of where the event occurred. A global map can then be updated at a server to mark the location of the extraordinary event as an attention region; i.e. an area where heightened awareness may be needed by a driver or autonomous vehicle. In a particular form, the attention region is determined/dimensioned according to a gaze pattern of a driver when the extraordinary event took place. The updated map is sent to all vehicles in the fleet to benefit all users.

By way of further summary, the present disclosure may relate to a vehicle/map system and a vehicle for use in same. The map system comprises a plurality of vehicles, each vehicle comprising a plurality of sensors for acquiring sensor data about operation of the vehicle, and including an internal sensor configured for monitoring a driver characteristic/behaviours. Each vehicle will have a location unit, such as GPS, for determining its position on Earth and a communication unit for transmission of and receipt of data. Each vehicle has at least one processor which enables acquisition of sensor data from the plurality of sensors in the vehicle, e.g. inside and/or out. From this data an extraordinary event can be identified and combined with location data to send to a server, hosting a global digital map. The server determines an update to the global digital map, e.g. in the form of an attention region that is derived from having monitored the driver's gaze or other characteristics such as biometric information. The updated information can be transmitted to a local digital map at each of the plurality of vehicles in the fleet/network.

## Claims

1. A method of updating information to a map, comprising the steps of:
acquiring sensor data from at least one sensor of at least one vehicle;
wherein the at least one sensor includes an internal sensor configured for monitoring a driver characteristic;
identifying an extraordinary event from the acquired sensor data;
acquiring a location of the at least one vehicle corresponding to the location of when the extraordinary event occurred;
updating and/or generating a map, shared across a fleet of vehicles, to reflect the location of the extraordinary event as an attention region.

2. The method of claim 1, including the step of alerting a user of the map to the location of the attention region for exercising extra caution; and/or causing a vehicle of the fleet to automatically decelerate proximate the attention region; and/or plotting a route to avoid or minimise disruption by the attention region.

3. The method of claim 1 or 2, wherein the attention region is determined from a gaze or body position of a driver as detected by the internal sensor.

4. The method of any preceding claim, wherein the extraordinary event corresponds with detection of one or more of: braking of the vehicle, change in body position of the driver or passenger, change in vital signs of the driver or passenger, steering movements, horn honking, eyes opening wider, coarse language, rapid acceleration, prolonged fixed gaze outside of a normal view region.

5. The method of any preceding claim, wherein the extraordinary event is recorded as metadata including at least one of GPS location at the time of the event, vehicle orientation, external object detections, the driver's head pose and/or gaze direction.

6. The method of any preceding claim, wherein the attention region is classified.

7. The method of claim 6, wherein a severity of the classification is given a weighting.

8. The method of any preceding claim, wherein the attention region corresponds to a gaze target classification by repeated or multiple extraordinary events.

9. The method of any preceding claim, wherein the attention region can be removed from the map if a corresponding extraordinary event is no longer detected.

10. The method of any preceding claim, wherein the internal sensor is configured for monitoring a driver wellness characteristic.

11. The method of claim 9, wherein a route is plotted for optimising wellness of a driver.

12. A vehicle, comprising:
a plurality of sensors for acquiring sensor data about operation of the vehicle, including an internal sensor configured for monitoring driver behaviour; and
at least one processor;
wherein the processor is configured to perform the steps of the method according to any of the preceding claims.

13. A vehicle system comprising:
a plurality of vehicles, each vehicle comprising:
a plurality of sensors for acquiring sensor data about operation of the vehicle, including an internal sensor configured for monitoring a driver characteristic;
a location unit;
a communication unit for transmission of and receipt of data; and
at least one processor configured for:
acquiring sensor data from the plurality of sensors;
identifying an extraordinary event from the acquired sensor data;
acquiring location data from the location unit corresponding to the location of when the extraordinary event occurred;
hosting a local digital map;
transmitting and receiving data via the communication unit;
a server, hosting a global digital map, for communication with the communication unit of each vehicle of the plurality of vehicles;
wherein the server is configured to receive transmitted data from the plurality of vehicles relating to extraordinary events and determines whether to update the global digital map to reflect the location of an extraordinary event as an attention region, and transmit same to the local digital map of each of the plurality of vehicles.
